# FASCICULE DE BREVET EUROPEEN

(11) **EP 0 545 758 B1**
(45) Date de publication et mention de la délivrance du brevet: **19.07.1995**
(21) Numéro de dépôt: 92403105.7
(22) Date de dépôt: 18.11.1992
(51) Int. Cl.: A47J 31/40, A47J 31/46

(54) **Machine à café express**
Espresso-Kaffeemaschine
Espresso coffee machine

(30) Priorité: 20.11.1991 FR 9114323
(43) Date de publication de la demande: 09.06.1993
(73) Titulaire: SEB S.A., F-21260 Selongey (FR)
(72) Inventeur: Bonneville, Jean-François, F-69400 Limas (FR); Beillard, Bernard, F-69005 Lyon (FR)
(74) Mandataire: Michelet, Alain

(56) Documents cités:
- EP-A- 0 184 561
- EP-A- 0 321 773
- FR-A- 1 319 958
- FR-A- 1 373 832
- FR-A- 2 655 529

## Description

La présente invention concerne une machine à café express.

On connaît, d'après le EP-A- 0 184 561, une machine à café express comportant au moins une chaudière pour chauffer de l'eau sous pression fournie par une pompe et destinée à être injectée dans de la mouture de café contenue dans des moyens formant filtre placés sur un support, et un nez adapté à pénétrer, au cours de chaque cycle de fonctionnement de la machine, à l'intérieur des moyens formant filtre afin de comprimer ladite mouture, et monté de manière coulissante par rapport au châssis de la machine par l'intermédiaire d'au moins un vérin hydraulique de commande actionné par l'eau fournie par ladite pompe, la machine comportant également des moyens formant clapet interdisant le passage de l'eau de la chaudière vers les moyens formant filtre tant que la pression de l'eau en aval de la pompe est inférieure à une valeur minimale prédéterminée, le nez étant porté par une première partie, cylindre ou piston, mobile par rapport à la seconde partie, piston ou cylindre, qui est reliée au châssis de la machine, dudit vérin.

Dans une réalisation de cette machine, le support des moyens formant filtre est fixe. La mouture de café est ainsi comprimée par le nez avec une force correspondant à la pression maximale de l'eau, qui peut atteindre environ 15 bars. Cette compression peut être excessive, notamment si la mouture est fine.

Le but de la présente invention est de remédier aux inconvénients précités des machines connues et de proposer un perfectionnement de ces machines capable d'éliminer lesdits inconvénients et présentant en outre des avantages supplémentaires de simplicité de fabrication et de fiabilité de fonctionnement.

Suivant l'invention, la machine à café express du type précité est caractérisée en ce que la seconde partie du vérin est montée de façon à pouvoir, sous l'action de l'eau sous pression fournie par la pompe, se déplacer par rapport au châssis de la machine contre l'action de moyens formant ressort antagoniste lorsque la première partie est immobilisée parce que le nez est en contact avec la mouture, pour permettre, avant l'ouverture des moyens formant clapet, le déploiement optimal du vérin, ce déploiement optimal étant limité par des moyens d'arrêt afin de limiter la force de compression de la mouture par le nez.

Ainsi, le support des moyens formant filtre est fixe, ce qui simplifie sa réalisation et son fonctionnement. La seconde partie du vérin se déplace par rapport au châssis de la machine, et les moyens d'arrêt limitent la force de compression de la mouture par le nez.

Suivant une version intéressante de l'invention, les moyens d'arrêt sont constitués par des moyens pour interdire l'arrivée à l'intérieur de la chambre du vérin de l'eau sous pression venant de la pompe lorsque la pression de cette eau atteint une valeur maximale prédéterminée inférieure à la pression provoquant l'ouverture des moyens formant clapet.

L'arrivée de l'eau à la chambre du vérin étant coupée, le déploiement du vérin cesse immédiatement. La force de compression de la mouture par le nez est proportionnelle à la pression de l'eau ainsi enfermée à l'intérieur de la chambre du vérin. On voit également que les parties constitutives du vérin sont soumises à ladite pression et non plus à la pression maximale, qui peut atteindre 15 bars, de l'eau fournie par la pompe de la machine. Ces parties constitutives, soumises à des contraintes plus faibles, peuvent être plus simples.

Suivant une version avantageuse de l'invention, les moyens d'interdiction comprennent un second vérin hydraulique d'isolement actionné également par l'eau sous pression venant de la pompe, et une première partie, mobile par rapport à la seconde partie, dudit second vérin d'isolement se déplace contre l'action de moyens formant ressort antagoniste pour obturer, lorsque la pression de l'eau atteint ladite valeur maximale prédéterminée, le passage de cette eau vers la chambre du vérin de commande.

L'invention peut ainsi être mise en oeuvre de façon très simple.

Suivant une version préférée de l'invention, la seconde partie du vérin de commande constitue une partie intermédiaire et est, à son extrémité opposée à la première partie dudit vérin, conformée de manière à former la première partie, mobile par rapport à la seconde partie, qui est fixée au châssis de la machine, du second vérin d'isolement, et la chambre du second vérin a un diamètre intérieur inférieur au diamètre intérieur de la chambre du premier vérin et communique avec ladite chambre par un passage ménagé dans ladite partie intermédiaire.

Ainsi, lorsque la pression de l'eau est suffisante pour vaincre la force des moyens formant ressort, et du fait de la différence entre les diamètres intérieurs des deux chambres, la partie intermédiaire se déplace par rapport à la seconde partie du second vérin d'isolement : lorsque ce second vérin arrive dans sa position rétractée, la partie intermédiaire vient interdire le passage de l'eau venant de la pompe et provoquer l'arrêt du déploiement du premier vérin de commande.

D'autres particularités et avantages de la présente invention apparaîtront dans la description détaillée ci-après.

Aux dessins annexés, donnés uniquement à titre non limitatif :
- la figure 1 est un schéma de principe, partiellement en coupe, d'un premier mode de réalisation de la présente invention, la machine étant représentée dans son état avant un nouveau cycle de fonctionnement ;
- la figure 2 est une vue semblable à la figure 1, la machine étant représentée dans son état pendant l'extraction de café ;
- la figure 3 est une vue semblable à la figure 1 d'un second mode de réalisation de la présente invention ;
- la figure 4 est une vue semblable à la figure 2 de la machine schématisée à la figure 3 ;
- la figure 5 est une vue agrandie en coupe d'un détail de la figure 3, le vérin de commande étant dans sa position rétractée avant un nouveau cycle de fonctionnement ;
- la figure 6 est une vue semblable à la figure 5, le vérin de commande étant dans sa position intermédiaire ;
- la figure 7 est une vue semblable à la figure 5, le vérin de commande étant dans sa position déployée finale, arrivée d'eau interdite après cédage de l'élément formant ressort.

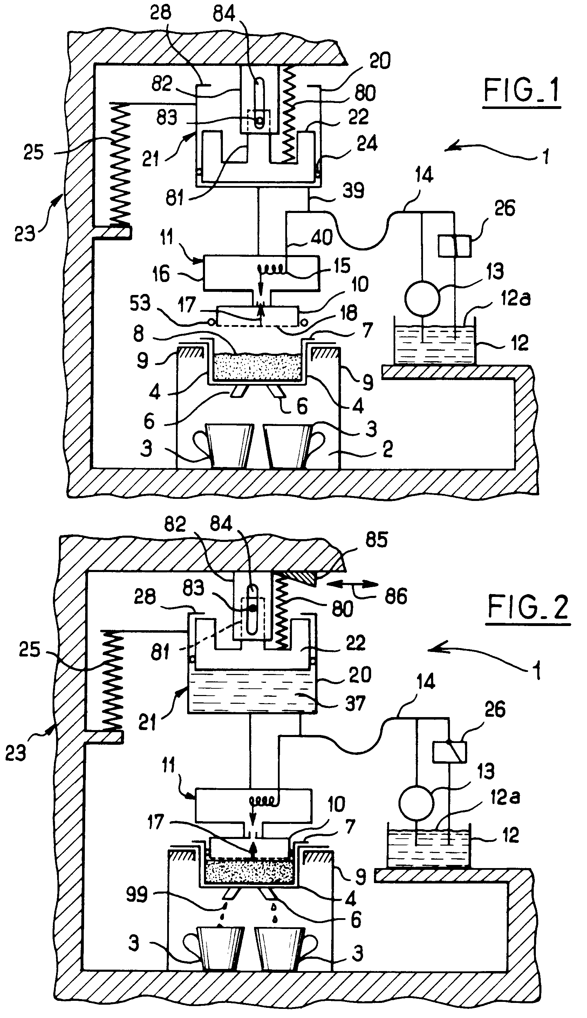

Dans le mode de réalisation représenté aux figures 1 et 2, la machine à café express 1 comporte un socle 2 destiné à recevoir une tasse 3 qui est placée sous le porte-filtre 4.

Le porte-filtre 4 comporte, de façon connue, à sa partie inférieure deux embouts tubulaires 6 destinés à guider l'infusion de café vers les tasses 3.

Un filtre 7 destiné à recevoir la mouture de café 8 est placé sur le porte-filtre 4. Il peut être d'un modèle quelconque, et être par exemple une coupelle métallique perforée conventionnelle, ou un filtre "mousseur" adapté à produire de la mousse appréciée par le consommateur, tel que celui décrit dans la demande de brevet français FR-A-2 655 529 au nom de la Demanderesse.

Le filtre 7 est destiné à recevoir une quantité de mouture de café 8 qui est fonction du nombre de tasses 3 à remplir. Il est déposé sur un support fixe schématisé en 9 : il est ainsi placé directement sous le nez de chaudière 10 solidaire de la chaudière 11.

La machine à café 1 comporte un réservoir 12 d'eau contenant une réserve d'eau 12a, et une pompe 13 destinée à pomper cette eau 12a pour alimenter la chaudière 11 par une conduite d'eau 14.

La machine à café express 1 comporte une chaudière 11 pour chauffer de l'eau sous pression fournie par une pompe 13 et destinée à être injectée dans de la mouture de café 8 contenue dans un filtre 7 placé sur un support 9. Elle comporte aussi un nez 10 adapté à pénétrer, au cours de chaque cycle de fonctionnement de la machine 1, à l'intérieur du filtre 7 afin de comprimer la mouture 8. Le nez 10 est monté de manière coulissante par rapport au châssis 23 de la machine 1, par l'intermédiaire d'un vérin hydraulique de commande 21 actionné par l'eau fournie par la pompe 13. La machine 1 comporte également un clapet 17 interdisant le passage de l'eau de la chaudière 11 vers le filtre 7 tant que la pression de l'eau en aval de la pompe 13 est inférieure à une valeur minimale prédéterminée.

Le nez 10 est porté par une première partie 20, le cylindre dans l'exemple représenté, mobile, contre l'action d'un ressort antagoniste 25, par rapport à la seconde partie 22, ici le piston, qui est reliée au châssis 23 de la machine 1, du vérin de commande 21.

Suivant l'invention, le support 9 du filtre 7 est fixe, et le piston 22 du vérin 21 est monté de façon à pouvoir se déplacer par rapport au châssis 23 de la machine 1 contre l'action d'un ressort antagoniste 80, lequel est monté entre le piston 22 et le châssis 23.

Le cylindre 20 porte à l'extrémité libre de sa paroi périphérique une butée 28 qui prend appui sur la paroi du piston 22 pour limiter le déplacement du cylindre 20 par rapport au piston 22 lors du déploiement complet du vérin 21.

On voit aux figures 1 et 2 que le piston 22 est monté de manière coulissante par rapport au châssis 23 ; il comporte un fût axial 81 qui coulisse à l'intérieur d'une douille 82 fixée au châssis 23. Le fût 81 est traversé radialement par une goupille 83 qui fait saillie à travers une lumière de guidage 84 longitudinale ménagée dans la paroi de la douille 82.

On voit à la figure 2 que l'on peut intercaler un coin 85 entre le châssis 23 et le ressort 80. On peut ainsi régler la valeur de la résistance opposée par le ressort 80 au déploiement du vérin 21 en déplaçant le coin 85 dans un sens ou dans l'autre suivant la double flèche 86. Le coin 85 est semblable à l'élément 75 décrit dans la demande antérieure précitée.

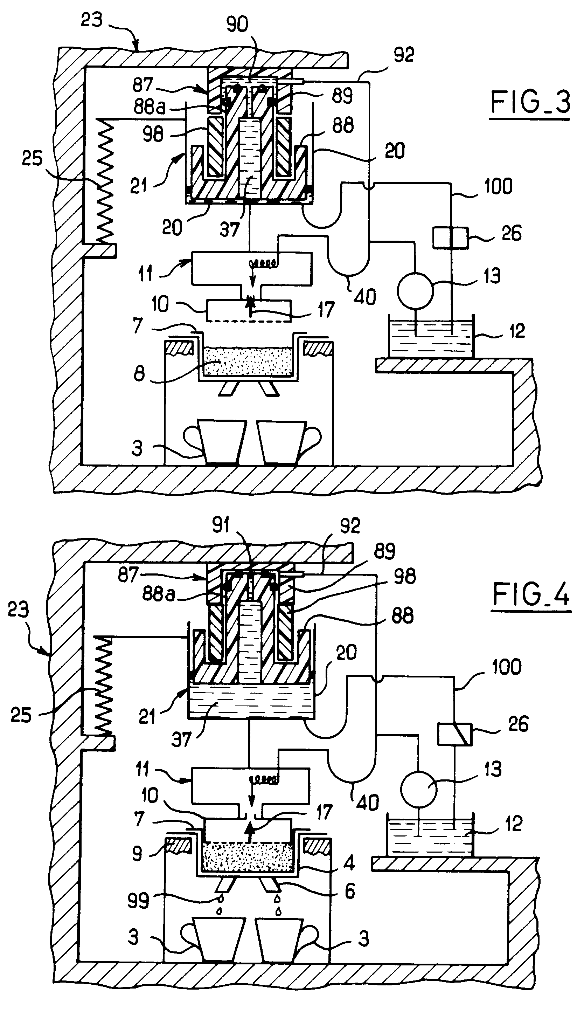

Dans le mode de réalisation représenté aux figures 3 à 7, la machine comporte des moyens pour interdire l'arrivée à l'intérieur de la chambre 37 du vérin 21 de l'eau sous pression venant de la pompe 13 lorsque la pression de cette eau atteint une valeur maximale prédéterminée inférieure à la pression provoquant l'ouverture du clapet 17.

Ces moyens d'interdiction comprennent un second vérin hydraulique d'isolement 87 actionné également par l'eau sous pression venant de la pompe 13.

Le piston 88 du vérin de commande 21 constitue une partie intermédiaire commune aux deux vérins 21 et 87 : il comporte un fût central 88a qui s'étend dans le sens opposé au cylindre 20. L'extrémité libre de ce fût 88a est conformée de manière à former le piston, mobile par rapport au cylindre 89 qui est fixé au châssis 23 de la machine 1, du second vérin d'isolement 87.

La chambre 90 du second vérin 87 a un diamètre intérieur inférieur au diamètre intérieur de la chambre 37 du premier vérin 21, et communique avec ladite chambre 37 par un passage axial 91 ménagé dans ladite partie intermédiaire 88. La tubulure 92 d'amenée de l'eau sous pression venant de la pompe 13 débouche dans une ouverture 93 ménagée dans la paroi périphérique 94 de la chambre 90 du second vérin d'isolement 87. En outre, le second vérin 87 comporte des moyens d'étanchéité 95 pour isoler l'un de l'autre de manière étanche l'ouverture 93 et le passage 91 lorsque le second vérin 87 est en position rétractée.

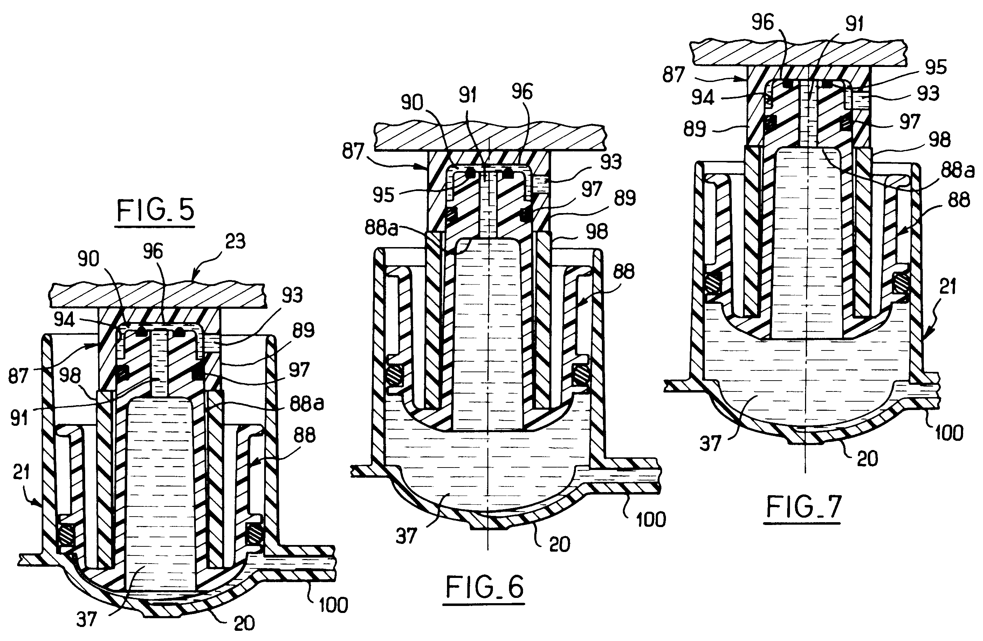

Comme on le voit en détail aux figures 5 à 7, les moyens d'étanchéité 95 sont constitués par un joint d'étanchéité annulaire 95 monté autour du passage 91 sur la face d'extrémité axiale du fût 88a limitant la chambre 90 du second vérin 87. Le joint 95 est adapté à porter de façon étanche sur la face intérieure correspondante 96 du cylindre 89 du vérin 87.

Le fût 88a présente un joint annulaire périphérique 97 qui assure l'étanchéité entre le fût 88a et la paroi périphérique intérieure 94 du cylindre 89.

L'élément formant ressort 98 est constitué par un élément annulaire en élastomère monté entre le fût 88a et le châssis 23 de la machine 1.

Dans l'exemple représenté, l'élément annulaire 98 entoure le fût 88a et s'appuie sur l'extrémité de la paroi périphérique du cylindre 89.

On sait qu'un tel élément en élastomère est capable de céder de manière élastique lorsqu'il est comprimé avec une certaine force, et de retrouver ses dimensions initiales lorsque cette force de compression cesse. On sait d'ailleurs prédéterminer la valeur de la force pour laquelle un tel élément en élastomère cède, en choisissant convenablement les dimensions de l'élément, la nature et la composition de l'élastomère, et la nature et la proportion d'une charge minérale éventuelle mélangée à l'élastomère pour en modifier la dureté.

On va maintenant décrire le mode de fonctionnement des deux modes de réalisation décrits ci-dessus.

Le premier mode de réalisation est schématisé à la figure 1 dans l'état au repos prêt pour un nouveau cycle de fonctionnement. Le filtre 7 est rempli de mouture de café 8 fraîche. La pompe 13 est à l'arrêt. La vanne 26 est ouverte. La chaudière 11 est pleine d'eau. Le vérin 21 est en position rétractée sous l'action du ressort 25, et le piston 22 est dans sa position déployée par rapport à la douille 82 sous l'action du ressort 80, dont la force est supérieure à celle du ressort 25.

L'eau sous pression venant de la pompe 13 pénètre dans la chambre 37 du vérin et provoque le déploiement de celui-ci : dans un premier temps, le cylindre 20 coulisse par rapport au piston 22, contre la force du ressort 25, jusqu'à ce que le nez 10 pénétrant à l'intérieur du filtre 7 vienne comprimer la mouture 8. A partir de cet instant, la pression de l'eau augmente et fait coulisser le piston 22 par rapport à la douille 82 jusqu'à ce que la butée 28 limite le déploiement du vérin 21 : la pression augmente alors jusqu'à la valeur nécessaire pour provoquer l'ouverture du clapet 17 et l'extraction du café, comme représenté à la figure 2 dans laquelle on a schématisé les gouttes 99 de café tombant dans les tasses 3.

Ce mode de réalisation permet de s'adapter automatiquement à la quantité de mouture présente dans le filtre 7, et de limiter la force de compression de celle-ci à la valeur de la différence entre les forces respectives des ressorts 80 et 25.

Le mode de réalisation représenté aux figures 3 à 7 fonctionne dans le premier temps du cycle comme le mode de réalisation précédent.

Dans l'état au repos représenté aux figures 3 et 5, le vérin 21 est en position rétractée, l'élément 98 en élastomère a sa dimension normale, et le fût 88a du vérin 87 est dans sa position sortie.

Dans le premier temps d'un cycle de fonctionnement, l'eau sous pression venant de la pompe 13 arrive par la tubulure 92 et l'ouverture 93 dans la chambre 90, et par le passage 91 dans la chambre 37 pour provoquer le déploiement du cylindre 20 contre la force du ressort 25. Le cylindre 20 coulisse jusqu'à ce que le nez 10 pénétrant à l'intérieur du filtre 7 vienne comprimer la mouture 8. L'élément 98 a toujours sa dimension initiale, le fût 88a est toujours dans sa position sortie, comme représenté à la figure 6, et la pression de l'eau augmente.

L'élément annulaire 98 cède lorsque la différence entre la force de pression de l'eau sur la face du piston 88 fermant la chambre 37 et la force correspondante s'exerçant sur la face du fût 88a fermant la chambre 90 atteint la résistance à la compression dudit élément : le piston 88 coulisse dans le sens correspondant au déploiement complet du vérin 21 et au retrait du vérin 87 jusqu'à ce que le joint 95 isole l'ouverture 93 du passage 91. Il n'y a donc pas besoin de butée.

A partir de cet instant, la pression de l'eau dans les chambres 37 et 90 reste constante et détermine la force de compression que le nez 10 exerce sur la mouture 8. La pression de l'eau sortant de la pompe continue à augmenter jusqu'à la valeur qui provoque l'ouverture du clapet 17. C'est la position représentée aux figures 4 et 7.

Pour permettre l'évacuation de l'eau de la chambre 37 et le retrait du vérin 21, la tubulure 100 d'évacuation de l'eau, sur laquelle est montée la vanne 26, débouche évidemment dans la chambre 37. Dès que la vanne 26 s'ouvre, l'élément 98 reprend sa dimension normale et repousse le piston 88, puis le ressort 25 commande le retour du cylindre 20 et le retrait du vérin 21.

Bien entendu, la présente invention n'est pas limitée aux modes de réalisation que l'on vient de décrire, et on peut apporter à ces derniers de nombreux changements et modifications sans sortir du domaine de l'invention, tel que defini dans les revendications.

On peut ainsi inverser les fonctions respectives du piston et du cylindre de chacun des vérins, modifier la forme, la nature et la disposition des éléments formant ressorts, remplacer les éléments décrits par des éléments équivalents remplissant la même fonction pour atteindre le même résultat.

Le vérin d'isolement peut présenter une forme, une structure et une disposition différentes de celles décrites. Il peut être indépendant du vérin 21.

On peut ainsi remplacer l'élément annulaire 98 en élastomère par un ou plusieurs éléments en élastomère de formes différentes, ou par un ou plusieurs ressorts.

## Revendications

1. Machine à café express (1), comportant au moins une chaudière (11) pour chauffer de l'eau sous pression fournie par une pompe (13) et destinée à être injectée dans de la mouture de café (8) contenue dans des moyens formant filtre (7) placés sur un support (9), et un nez (10) adapté à pénétrer, au cours de chaque cycle de fonctionnement de la machine (1), à l'intérieur des moyens formant filtre (7) afin de comprimer ladite mouture (8), et monté de manière coulissante par rapport au châssis (23) de la machine (1) par l'intermédiaire d'au moins un vérin hydraulique de commande (21) actionné par l'eau fournie par ladite pompe (13), la machine (1) comportant également des moyens formant clapet (17) interdisant le passage de l'eau de la chaudière (11) vers les moyens formant filtre (7) tant que la pression de l'eau en aval de la pompe (13) est inférieure à une valeur minimale prédéterminée, le nez (10) étant porté par une première partie (20), cylindre ou piston, mobile par rapport à la seconde partie (22, 88), piston ou cylindre, qui est reliée au châssis (23) de la machine (1), dudit vérin (21), le support (9) des moyens formant filtre (7) étant fixe, caractérisée en ce que la seconde partie (22, 88) du vérin (21) est montée de façon à pouvoir, sous l'action de l'eau sous pression fournie par la pompe (13), se déplacer par rapport au châssis (23) de la machine (1) contre l'action de moyens formant ressort antagoniste (80, 98) lorsque la première partie (20) est immobilisée parce que le nez (10) est en contact avec la mouture (8), pour permettre, avant l'ouverture des moyens formant clapet (17), le déploiement optimal du vérin (21), ce déploiement optimal étant limité par des moyens d'arrêt (28, 87) afin de limiter la force de compression de la mouture (8) par le nez (10).

2. Machine à café express conforme à la revendication 1, caractérisée en ce que les moyens d'arrêt (28) sont constitués par des moyens de butée (28) limitant le déplacement relatif de la première partie (20) par rapport à la seconde partie (22) du vérin (21) lors du déploiement complet dudit vérin (21).

3. Machine à café express conforme à la revendication 2, caractérisée en ce que la seconde partie (22) du vérin (21) est montée de manière coulissante par rapport à des moyens de guidage (82) fixés au châssis (23) de la machine (1), et en ce que des moyens formant ressort (80) sont intercalés entre ladite seconde partie (22) et le châssis (23) de la machine (1).

4. Machine à café express conforme à la revendication 1, caractérisée en ce que les moyens d'arrêt (87) sont constitués par des moyens (87) pour interdire l'arrivée, à l'intérieur de la chambre (37) du vérin (21), de l'eau sous pression venant de la pompe (13) lorsque la pression de cette eau atteint une valeur maximale prédéterminée inférieure à la pression provoquant l'ouverture des moyens formant clapet (17).

5. Machine à café express conforme à la revendication 4, caractérisée en ce que ces moyens d'interdiction (87) comprennent un second vérin hydraulique d'isolement (87) actionné également par l'eau sous pression venant de la pompe (13).

6. Machine à café express conforme à la revendication 5, caractérisée en ce qu'une première partie (88a), mobile par rapport à la seconde partie (89), dudit second vérin d'isolement (87) se déplace contre l'action de moyens formant ressort antagoniste (98) pour obturer, lorsque la pression de l'eau atteint ladite valeur maximale prédéterminée, le passage de cette eau vers la chambre (37) du vérin de commande (21).

7. Machine à café express conforme à la revendication 6, caractérisée en ce que la seconde partie (88) du vérin de commande (21) constitue une partie intermédiaire (88) et est, à son extrémité (88a) opposée à la première partie (20) dudit vérin (21), conformée de manière à former la première partie (88a), mobile par rapport à la seconde partie (89), qui est fixée au châssis (23) de la machine (1), du second vérin d'isolement (87).

8. Machine à café express conforme à la revendication 7, caractérisée en ce que la chambre (90) du second vérin (87) a un diamètre intérieur inférieur au diamètre intérieur de la chambre (37) du premier vérin (21) et communique avec ladite chambre (37) par un passage (91) ménagé dans ladite partie intermédiaire (88).

9. Machine à café express conforme à la revendication 8, caractérisée en ce que la tubulure (92) d'amenée de l'eau sous pression venant de la pompe (13) débouche dans une ouverture (93) ménagée dans une paroi (94) de la chambre (90) du second vérin d'isolement (87), et en ce que ledit second vérin (87) comporte des moyens d'étanchéité (95) pour isoler l'un de l'autre de manière étanche l'ouverture (93) et le passage (91) lorsque ledit second vérin (87) est en position rétractée.

10. Machine à café express conforme à la revendication 9, le passage (91) étant sensiblement axial, caractérisée en ce que les moyens d'étanchéité (95) sont constitués par un joint d'étanchéité annulaire (95) monté autour du passage (91) sur la face d'extrémité axiale de la première partie (88a) du second vérin (87) limitant la chambre (90) dudit second vérin (87), et adapté à porter de façon étanche sur la face interne correspondante (96) de la seconde partie (89) dudit second vérin (87).

11. Machine à café express conforme à l'une quelconque des revendications 6 à 10, caractérisée en ce que l'élément formant ressort (98) est constitué par au moins un élément formant ressort (98) en élastomère monté entre la première partie (88a) du second vérin (87) et le châssis (23) de la machine (1).

12. Machine à café express conforme à la revendication 11, caractérisée en ce que l'élément formant ressort (98) en élastomère est un élément annulaire (98) entourant au moins une partie (88a) du second vérin (87).

## Claims

1. Expresso coffee machine (1) comprising at least a heater (11) to heat pressure water provided by a pump (13) and liable to be introduced in powdered coffee (8) inserted into filter means (7) located on a support (9) and a nose (10) liable to penetrate during each machine operating cycle (1) inside the filter means (7) such as to compress the said powdered coffee (8) and slidingly mounted with respect to the frame (23) of the machine (1) by means of at least a control hydraulic jack (21) moved by the water provided by said pump (13), the machine (1) comprising also valve means (17) prohibiting the flow of the water of the heater (11) towards the filter means (7) when the water pressure downstream the pump (13) is less than a predetermined low value, the nose (10) being held by a first component (20), cylinder or piston of said jack (21), moveable with respect to a second component (22,88) piston or cylinder, which is connected to the frame (23) of the machine (1), the support (9) of the filter means (7) being fixed, characterized in that the second component (22,88) of the jack (21) is mounted in order to be able, under the effect of the pressure water provided by the pump (13), to move with respect to the frame (23) of the machine (1) against the effect of antagonist spring means (80, 98) when the first component (20) is immobilized because the nose (10) is engaged with the powdered coffee (8) in order to allow before opening of the valve means (17) optimum spreading out of the jack (21), said optimum spreading out being limited by stopping means (28, 87) in order to limit the compressing strength of the powdered coffee (8) by the nose (10).

2. Expresso coffee machine according to claim 1, characterized in that the stopping means (28) comprise stop means (28) limiting the relative displacement of the first component (20) with respect to the second component (22) of the jack (21) during the whole spreading out of said jack (21).

3. Expresso coffee machine according to claim 2, characterized in that the second component (22) of the jack (21) is slidably mounted with respect to guiding means (82) fixed on the frame (23) of the machine (1) and in that spring means (80) are inserted between said second component (22) and the frame (23) of the machine (1).

4. Expresso coffee machine according to claim 1, characterized in that the stopping means (87) comprise means (87) to prohibite the inlet, inside the chamber (37) of the jack (21) of pressure water provided by the pump (13) when the water pressure is at a predetermined maximum value which is less than the pressure allowing the opening of the valve means (17).

5. Expresso coffee machine according to claim 4, characterized in that said prohibiting means (87) comprise a second isolating hydraulic jack (87) moved also by pressure water provided by the pump (13).

6. Expresso coffee machine according to claim 5, characterized in that a first component (88a) moveable with respect to the second component (89) of said second isolating jack (87) is moved against the action of the antagonist spring means (98) to stop when the water pressure is at said predetermined maximum value, the flow of said water towards the chamber (37) of the control jack (21).

7. Expresso coffee machine according to claim 6, characterized in that the second component (88) of the control jack (21) provides an intermediate element (88) and is at the end thereof (88a) facing the first component (20) of said jack (21) shaped in order to provide the first component (88a) moveable with respect to the second component (89) which is fixed to the frame (23) of the machine (1) of the second isolating jack (87).

8. Expresso coffee machine according to claim 7, characterized in that the chamber (90) of the second jack (87) has an inner diameter less than the inner diameter of the chamber (37) of the first jack (21) and communicates with said chamber (37) via a passage (91) provided in said intermediate element (88).

9. Expresso coffee machine according to claim 8, characterized in that the manifold (92) of the pressure water feeding from the pump (13) opens into an opening (93) provided in a wall (94) of the chamber (90) of the second isolating jack (87) and in that said second jack (87) comprises sealing means (95) to isolate sealingly one from another the opening (93) and the passage (91) when said second jack (87) is in a retracted position.

10. Expresso coffee machine according to claim 9, the passage (91) being substantially axial, characterized in that the sealing means (95) comprise an annular sealing gasket (95) mounted around the passage (91) on the axial end face of the first component (88a) of the second jack (87) limiting the chamber (90) of said second jack (87) and able to sealingly engage against the corresponding inner face (96) of the second component (89) of said second jack (87).

11. Expresso coffee machine according to any one of claims 6 to 10, characterized in that the spring means (98) comprises at least an elastomer spring element (98) provided between the first component (88a) of the second jack (87) and the frame (23) of the machine (1).

12. Expresso coffee machine according to claim 11, characterized in that the elastomer spring element (98) is an annular element (98) surrounding at least a component (88a) of the second jack (87).

## Patentansprüche

1. Espresso-Kaffeemaschine (1), die wenigstens einen Kessel (11) zum Erhitzen des unter Druck stehenden Wassers, das von einer Pumpe (13) geliefert wird und dazu bestimmt ist, in das Kaffeemahlgut (8) eingespritzt zu werden, das in einen Filter (7) bildenden Mitteln, die auf einem Träger (9) angeordnet sind, enthalten ist, und ein Vorderteil (10) aufweist, welches angepaßt ist, während jedes Betriebszyklus der Maschine (1) in das Innere der einen Filter (7) bildenden Mittel einzudringen, um das genannte Mahlgut (8) zusammenzudrücken, und welches in bezug auf den Rahmen (23) der Maschine (1) mittels wenigstens eines hydraulischen Steuerzylinders (21) verschiebbar angebracht ist, der durch das von der genannten Pumpe (13) gelieferte Wasser angetrieben wird, wobei die Maschine (1) ebenfalls ein Ventil (17) bildende Mittel aufweist, die den Durchgang des Wassers vom Kessel (11) zu den einen Filter (7) bildenden Mitteln sperren, solange der Druck des Wassers stromabwärts der Pumpe (13) unter einem festgelegten Minimalwert liegt, wobei das Vorderteil (10) von einem ersten Teil (20), Zylinder oder Kolben des genannten Zylinders (21), getragen wird, der in bezug auf den zweiten Teil (22, 88), Kolben oder Zylinder, der mit dem Rahmen (23) der Maschine (1) verbunden ist, beweglich ist, wobei der Träger (9) der einen Filter (7) bildenden Mittel feststeht, dadurch gekennzeichnet, daß der zweite Teil (22, 88) des Zylinders (21) so angebracht ist, daß er sich unter der Wirkung des von der Pumpe (13) gelieferten, unter Druck stehenden Wassers in bezug auf den Rahmen (23) der Maschine (1) gegen die Wirkung von eine Ausgleichfeder (80, 98) bildenden Mitteln verschieben kann, wenn der erste Teil (20) festgesetzt ist, weil der Vorderteil (10) in Kontakt mit dem Mahlgut (8) steht, um vor der Öffnung der ein Ventil (17) bildenden Mittel den optimalen Auszug des Zylinders (21) zu gestatten, wobei dieser optimale Auszug von Anhaltemitteln (28, 87) begrenzt ist, um die Kraft für das Zusammendrücken des Mahlguts (8) durch das Vorderteil (10) zu begrenzen.

2. Espresso-Kaffemaschine nach Anspruch 1, dadurch gekennzeichnet, daß die Anhaltemittel (28) von Anschlagmitteln (28) gebildet sind, die die relative Verschiebung des ersten Teils (20) in bezug auf den zweiten Teil (22) des Zylinders (21) zur Zeit des vollständigen Auszugs des genannten Zylinders (21) begrenzen.

3. Espresso-Kaffemaschine nach Anspruch 2, dadurch gekennzeichnet, daß der zweite Teil (22) des Zylinders (21) in in bezug auf an dem Rahmen (23) der Maschine (1) befestigte Führungsmittel (82) verschiebbarer Weise angebracht ist und daß die eine Feder (80) bildenden Mittel zwischen den genannten zweiten Teil (22) und den Rahmen (23) der Maschine (1) zwischengelegt sind.

4. Espresso-Kaffemaschine nach Anspruch 1, dadurch gekennzeichnet, daß die Anhaltemittel (87) von Mitteln (87) zum Sperren der Zufuhr des von der Pumpe (13) kommenden, unter Druck stehenden Wassers in das Innere der Kammer (37) des Zylinders (21) gebildet sind, wenn der Druck dieses Wassers einen festgelegten Maximalwert erreicht, der unter dem Druck liegt, der die Öffnung der ein Ventil (17) bildenden Mittel einleitet.

5. Espresso-Kaffemaschine nach Anspruch 4, dadurch gekennzeichnet, daß diese Sperrmittel (87) einen zweiten hydraulischen Isolierzylinder (87) umfassen, der ebenfalls von dem von der Pumpe (13) kommenden, unter Druck stehenden Wasser angetrieben wird.

6. Espresso-Kaffemaschine nach Anspruch 5, dadurch gekennzeichnet, daß ein erster Teil (88a) des zweiten Isolierzylinders (87), der in bezug auf den zweiten Teil (89) beweglich ist, sich gegen die Wirkung der eine Ausgleichsfeder (98) bildenden Mittel verschiebt, um, wenn der Druck des Wassers den genannten festgelegten Maximalwert erreicht, den Durchgang dieses Wassers zur Kammer (37) des Steuerzylinders (21) zu veschließen.

7. Espresso-Kaffemaschine nach Anspruch 6, dadurch gekennzeichnet, daß der zweite Teil (88) des Steuerzylinders (21) einen Zwischenteil (88) bildet und und an seinem dem ersten Teil (20) des Zylinders (21) abgewandten Ende (88a) so gestaltet ist, daß er den ersten Teil (88a) des zweiten Isolierzylinders (87) bildet, der in bezug auf den zweiten Teil (89) beweglich ist, welcher an dem Rahmen (23) der Maschine (1) befestigt ist.

8. Espresso-Kaffemaschine nach Anspruch 7, dadurch gekennzeichnet, daß die Kammer (90) des zweiten Zylinders (87) einen Innendurchmesser hat, der kleiner als der Innendurchmeser der Kammer (37) des ersten Zylinders (21) ist, und mit der genannten Kammer (37) durch einen Durchgang (91) in Verbindung steht, der in dem genannten Zwischenteil (88) vorgesehen ist.

9. Espresso-Kaffemaschine nach Anspruch 8, dadurch gekennzeichnet, daß der Zulaufstutzen (92) für das von der Pumpe (13) kommende, unter Druck stehende Wasser in eine in einer Wand (94) der Kammer (90) des zweiten Isolierzylinders (87) vorgesehene Öffnung (93) mündet, und daß der genannte zweite Zylinder (87) Dichtungsmittel (95) aufweist, um die Öffnung (93) und den Durchgang (91) voneinander in dichter Weise zu isolieren, wenn der genannte zweite Zylinder (87) in der zurückgezogenen Position ist.

10. Espresso-Kaffemaschine nach Anspruch 9, wobei der Durchgang (91) im wesentlichen axial ist, dadurch gekennzeichnet, daß die Dichtungsmitttel (95) durch eine ringförmige Dichtung (95) gebildet sind, die um den Durchgang (91) herum auf der Fläche des axialen Endes des ersten Teils (88a) des zweiten Zylinders (87) angebracht ist, der die Kammer (90) des genannten zweiten Zylinders (87) begrenzt und so angepaßt ist, daß er in dichter Weise auf der entsprechenden Innenfläche (96) des zweiten Teils (89) des genannten zweiten Zylinders (87) sitzt.

11. Espresso-Kaffemaschine nach einem der Ansprüche 6 bis 10, dadurch gekennzeichnet, daß das eine Feder (98) bildende Element von wenigstens einem eine Feder (98) bildenden Element aus Elastomermaterial gebildet ist, das zwischen dem ersten Teil (88a) des zweiten Zylinders (87) und dem Rahmen (23) der Maschine (1) angebracht ist.

12. Espresso-Kaffemaschine nach Anspruch 11, dadurch gekennzeichnet, daß das eine Feder (98) bildende Element aus Elastomermaterial ein ringförmiges Element (98) ist, das wenigstens einen Teil (88a) des zweiten Zylinders (87) umgibt.
